# EUROPEAN PATENT APPLICATION

(11) **EP 4 380 134 A1**
(43) Date of publication of application: **05.06.2024**
(21) Application number: 23195631.9
(22) Date of filing: 06.09.2023
(51) Int. Cl.: H04L 67/12, H04L 67/00, G06F 8/65, G07C 5/00

(54) **METHOD OF EXTENDING MESSAGE NODES OF OMA-DM PROTOCOL TO IMPROVE EFFICIENCY OF VEHICLE OTA UPDATES AND MESSAGE NODE EXTENSION APPARATUS USING THE SAME**

(30) Priority: 30.11.2022 KR 20220164366
(71) Applicant: Penta Security Systems, Inc., Seoul 07241 (KR); Autocrypt Co., Ltd., Seoul 07241 (KR)
(72) Inventor: OH, Jin Hyeok, 14247 Gyeonggi-do (KR); YUN, Keon, 05825 Seoul (KR); YUN, Sun Woo, 10251 Gyeonggi-do (KR); LEE, Sang Min, 07776 Seoul (KR); LIM, Myong Cheol, 01755 Seoul (KR); KIM, Tae Gyun, 16811 Gyeonggi-do (KR); SIM, Sang Gyoo, 06939 Seoul (KR); KIM, Eui Seok, 03730 Seoul (KR); KIM, Duk Soo, 03747 Seoul (KR)
(74) Representative: Zimmermann, Tankred Klaus

(57) **Abstract**

A method of extending message nodes of an Open Mobile Alliance (OMA)-Device Management (DM) protocol, which is performed by a server to improve efficiency of a vehicle over-the air (OTA) update, may comprise: receiving a package including vehicle device information (DevInfo) from a client of a vehicle; and checking an update state of software (SW) installed on the client on the basis of information having a field for defining information on a vehicle registration district, a field for defining information on a production year of the vehicle, and an SW field for defining an SW expansion which are included in the DevInfo.

## Description

### BACKGROUND

### 1. Technical Field

Example embodiments of the present disclosure relate, in general, to a method of extending message nodes of an Open Mobile Alliance (OMA)-Device Management (DM) protocol to improve efficiency of a vehicle over-the air (OTA) update and an apparatus using the same.

### 2. Related Art

Open Mobile Alliance (OMA) is an organization which develops open standards for the wireless industry field. This organization's mission is to provide interoperable service between countries, communication service providers, and mobile terminals. OMA is interested in standardization of practical protocols only and assumes the presence of networking technologies defined by external organizations. Specific cellular network technologies are not a concern in OMA standards as long as the technologies are used in providing networking or practical data transport.

Over-the air (OTA) is a firmware update method. OTA means a technology for updating firmware in a wireless manner, such as Wi-Fi, a mobile communication network, or the like, without connecting to a computer. Lately, vehicle OTA update technology has been applied to remote vehicle management for remotely distributing updates on new software (SW), firmware, configurations, and encryption keys without offline intervention.

With vehicle OTA update, it is possible to omit or reduce the cost or time for on-site repairs, Universal Serial Bus (USB) delivery, and the like for vehicle SW updates, and most vehicle defects can be corrected with SW updates or new functions for vehicles can be efficiently provided through vehicle SW updates.

Meanwhile, when a vehicle OTA update is used, an attacker may apply an attack technique for a personal computer (PC) or smartphone to an autonomous vehicle without any change, and thus it is necessary to defend against or prevent malicious attacks by such attackers. The most efficient method of defending or preventing such malicious attacks is known to be immediate updates of vehicle SW.

### SUMMARY

Accordingly, example embodiments of the present disclosure are provided to substantially obviate one or more problems due to limitations and disadvantages of the related art.

Example embodiments of the present disclosure provide a method of extending message nodes of an Open Mobile Alliance (OMA)-Device Management (DM) protocol to improve efficiency of a vehicle over-the air (OTA) update and an apparatus using the same.

Example embodiments of the present disclosure also provide a method of extending message nodes of an OMA-DM protocol to resolve a problem that device information (DevInfo) items for synchronizing device state information in an OMA-DM standard are unsuitable for an update of an autonomous vehicle, and provide a DevInfo node for enough vehicle information synchronization in an OTA update of the autonomous vehicle and an apparatus using the same.

Example embodiments of the present disclosure also provide a method of extending message nodes of an OMA-DM protocol to resolve a problem that may be caused by a massive OTA update, that is, to reduce an update time, the amount of data, and communication costs for a massive OTA update, and an apparatus using the same.

Example embodiments of the present disclosure also provide a method of extending message nodes of an OMA-DM protocol in which differentiated updates may be performed according to DM object definitions suitable for autonomous vehicles and states of autonomous vehicles by extending and defining standard specifications for a management server to accurately identify management information of autonomous vehicles, and an apparatus using the same.

According to a first exemplary embodiment of the present disclosure, a method of extending message nodes of an Open Mobile Alliance (OMA)-Device Management (DM) protocol, which is performed by a server to improve efficiency of a vehicle over-the air (OTA) update, may comprise: receiving a package including vehicle device information (DevInfo) from a client of a vehicle; and checking an update state of software (SW) installed on the client on the basis of information having a field for defining information on a vehicle registration district, a field for defining information on a production year of the vehicle, and an SW field for defining an SW expansion which are included in the DevInfo.

The SW field may include a field for defining an identifier (ID) of target SW, a field for defining a current version of the target SW, a field for defining a last downloaded SW version, and a field for defining a last update date.

The checking of the update state of the SW may comprise comparing a latest version of the SW stored in the server with a current version of target SW in the DevInfo which is a version of the SW installed in the vehicle.

The checking of the update state of the SW may further comprise, when the latest version of the SW stored in the server is found not to be the same as the current version of the target SW as a result of comparing the latest version with the current version, comparatively verifying the latest version of the SW stored in the server with a last downloaded version of the SW in the DevInfo.

The method may further comprise transmitting only a SW file requiring an update to the client, wherein the client may update only SW requiring an update in the vehicle with the SW file.

According to a second exemplary embodiment of the present disclosure, a method of extending message nodes of an Open Mobile Alliance (OMA)-Device Management (DM) protocol, which is performed by a client of a vehicle to improve efficiency of a vehicle over-the air (OTA) update, may comprise: generating a package including vehicle device information (DevInfo); and transmitting the package to a server, wherein the DevInfo includes information having a field for defining information on a vehicle registration district, a field for defining information on a production year of the vehicle, and a software (SW) field for defining an SW expansion, and the server checks an update state of SW installed on the client or possessed by the client on the basis of the DevInfo.

The SW field may include a field for defining an identifier (ID) of target SW, a field for defining a current version of the target SW, a field for defining a last downloaded SW version, and a field for defining a last update date.

The server may compare a previously stored latest version of the SW with a current version of target SW in the DevInfo which is a version of the SW installed in the vehicle and, when the latest version of the SW stored in the server is found to be different from the current version of the target SW as a comparison result, comparatively verifies the latest version of the SW stored in the server with a last downloaded version of the SW in the DevInfo.

The method may further comprise receiving only a SW file requiring an update from the server.

The method may further comprise updating only SW requiring an update in the vehicle with the SW file.

According to a third exemplary embodiment of the present disclosure, a message node extension apparatus, which is a server using a method of extending message nodes of an Open Mobile Alliance (OMA)-Device Management (DM) protocol to improve efficiency of a vehicle over-the air (OTA) update, may comprise: a transceiver device installed in the server and connected to a client of a vehicle through a network; and a processor connected to the transceiver device and configured to control operations of the transceiver device, wherein the processor performs operations of: receiving a package including vehicle device information (DevInfo) from the client; and checking an update state of software (SW) installed on the client on the basis of information having a field for defining information on a vehicle registration district, a field for defining information on a production year of the vehicle, and an SW field for defining an SW expansion which are included in the DevInfo.

The SW field may include a field for defining an identifier (ID) of target SW, a field for defining a current version of the target SW, a field for defining a last downloaded SW version, and a field for defining a last update date.

The processor may compare a latest version of the SW stored in the server with a current version of target SW in the DevInfo which is a version of the SW installed in the vehicle.

When the latest version of the SW stored in the server is found not to be the same as the current version of the target SW as a comparison result, the processor may comparatively verify the latest version of the SW stored in the server with a last downloaded version of the SW in the DevInfo.

The processor may further perform an operation of transmitting a SW file requiring an update to the client, wherein the SW file is used for the client to update only SW requiring an update in the vehicle.

According to a fourth exemplary embodiment of the present disclosure, a message node extension apparatus, which is a client of a vehicle using a method of extending message nodes of an Open Mobile Alliance (OMA)-Device Management (DM) protocol to improve efficiency of a vehicle over-the air (OTA) update, may comprise: a transceiver device installed in the vehicle and connected to a server through a network; and a processor connected to the transceiver device and configured to control operations of the transceiver device, wherein the processor performs operations of: generating a package including vehicle device information (DevInfo); and transmitting the package to the server through the transceiver device, wherein the DevInfo includes information having a field for defining information on a vehicle registration district, a field for defining information on a production year of the vehicle, and a software (SW) field for defining an SW expansion and is used for the server to check an update state of SW installed on the client or possessed by the client of the vehicle.

The SW field may include a field for defining an identifier (ID) of target SW, a field for defining a current version of the target SW, a field for defining a last downloaded SW version, and a field for defining a last update date.

The server may compare a previously stored latest version of the SW with a current version of target SW in the DevInfo which is a version of the SW installed in the vehicle and, when the latest version of the SW stored in the server is found to be different from the current version of the target SW as a comparison result, comparatively verify the latest version of the SW stored in the server with a last downloaded version of the SW in the DevInfo.

The processor may further perform an operation of receiving a SW file requiring an update from the server through the transceiver device.

The processor may further perform an operation of updating only SW requiring an update in the vehicle with the SW file.

According to the present disclosure, it is possible to increase the efficiency of vehicle OTA updates by extending an OMA-DM standard.

According to the present disclosure, it is also possible to provide a DevInfo node with new items added for enough vehicle information synchronization in the case of an OTA update of an autonomous vehicle by extending DevInfo items for synchronizing device state information in an OMA-DM standard.

According to the present disclosure, it is also possible to resolve a problem that can be caused by a massive OTA update, that is, to reduce an update time, the amount of data, and communication costs for a massive OTA update, by increasing DevInfo items.

According to the present disclosure, it is also possible to effectively perform differentiated updates according to DM object definitions suitable for autonomous vehicles and states of autonomous vehicles by extending and defining standard specifications for a management server to accurately identify management information of autonomous vehicles.

### BRIEF DESCRIPTION OF DRAWINGS

FIG. 1 is a sequence diagram illustrating a setup phase of an Open Mobile Alliance (OMA)-Device Management (DM) protocol proposed by OMA.
FIG. 2 is a sequential diagram illustrating a management phase of the OMA-DM protocol.
FIG. 3 is an example of specifications defined in a synchronization markup language (SyncML) format for a server to remotely access data in a terminal complying with the OMA-DM protocol.
FIG. 4 is a sequence diagram illustrating a DM package flow of a large object addition for large object handling according to the OMA-DM protocol.
FIG. 5 is a diagram illustrating an addressing scheme for DevInfo items of a replace message which is an alert message 1201 of package #1.
FIG. 6 is a diagram illustrating an expanded structure of DevInfo (simply, "expanded DevInfo") which may be employed in a method of extending message nodes of an OMA-DM protocol to improve efficiency of vehicle OTA updates (simply, "the message node extension method").
FIG. 7 is a sequence diagram illustrating a method of extending message nodes using the expanded DevInfo of FIG. 6.
FIG. 8 is a flowchart illustrating a method of extending message nodes according to another example embodiment of the present disclosure.
FIG. 9 is a flowchart illustrating a detailed process which may be employed in the checking process of FIG. 8.
FIG. 10 is a schematic block diagram which may be employed by an apparatus for extending message nodes of an OMA-DM protocol to improve efficiency of vehicle OTA updates (simply, "message node extension apparatus") according to another example embodiment of the present disclosure.

### DETAILED DESCRIPTION OF THE EMBODIMENTS

Exemplary embodiments of the present disclosure are disclosed herein. However, specific structural and functional details disclosed herein are merely representative for purposes of describing exemplary embodiments of the present disclosure. Thus, exemplary embodiments of the present disclosure may be embodied in many alternate forms and should not be construed as limited to exemplary embodiments of the present disclosure set forth herein.

Accordingly, while the present disclosure is capable of various modifications and alternative forms, specific exemplary embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular exemplary embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

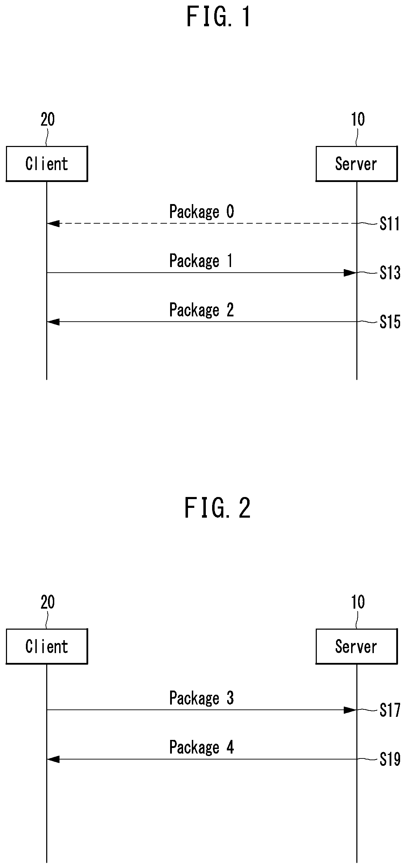

FIG. 1 is a sequence diagram illustrating a setup phase of an Open Mobile Alliance (OMA)-Device Management (DM) protocol proposed by OMA.

Referring to FIG. 1, in the setup phase of the OMA-DM protocol, a client 20 receives package 0 from a server 10 (S11). Package 0 includes a management initialization alert message. A package includes at least one message. The server 10 may be a DM server complying with the OMA-DM protocol, and the client 20 may be a DM client complying with the OMA-DM protocol.

Subsequently, the client 20 transmits package 1 to the server 10 (S13). Package 1 is an initialization package for client initialization of a DM client and includes client credentials and a message about device information.

Subsequently, the client 20 receives package 2 from the server 10 (S15). Package 2 is an initialization package for server initialization of a DM server and includes server credentials and a message about initial management operations from the server 10 or user interaction commands.

FIG. 2 is a sequential diagram illustrating a management phase of the OMA-DM protocol.

Referring to FIG. 2, in the management phase of the OMA-DM protocol, the client 20 transmits package 3 to the server 10 (S17). Package 3 is a DM client response transmitted to a DM server and includes a message about a management operation.

Subsequently, the client 20 receives package 4 from the server 10 (S19). Package 4 is a package for an additional management task of a DM server and includes at least one message about an additional user interaction and management task for a case in which a session continues.

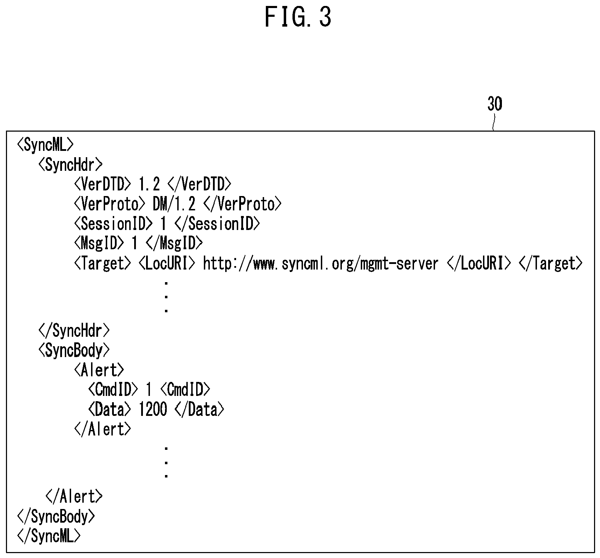

FIG. 3 is an example of specifications defined in a synchronization markup language (SyncML) format for a server to remotely access data in a terminal complying with the OMA-DM protocol.

Referring to FIG. 3, a DM server complying with the OMA-DM protocol may remotely access data in a DM client through a SyncML message. Such a SyncML message is a platform-independent data synchronization standard and may synchronize data with any device such as a personal computer (PC) using Microsoft Windows, a PC using Linux, a palm personal digital assistant (PDA), a cellular phone, an iPod, an iPhone, a vehicle, or the like. SyncML is based on extensible markup language (XML). Also, the SynchML message may be applied to package 1 transmitted from a DM client, package 2 transmitted from a DM server, and the like. The message may include at least one command.

Each message includes a header designated as a SyncHdr element and a message body designated as a SyncBody element. In other words, message container elements include <SyncML>, <SyncHdr>, and <SyncBody>.

<SyncML> is the uppermost element and may include a MIME content type.

<SyncHdr> includes elements for specifying authentication information required for a DM service, a document type definition (DTD) VerDTD, a protocol type VerProto, a session identifier (ID) SessionID, a message ID MsgID, target path information, and the like. <SyncHdr> is used synonymously with "data synchronization service."

<SyncBody> is an element containing commands that require actual execution and may include elements such as a command ID CmdID, data Data, and the like.

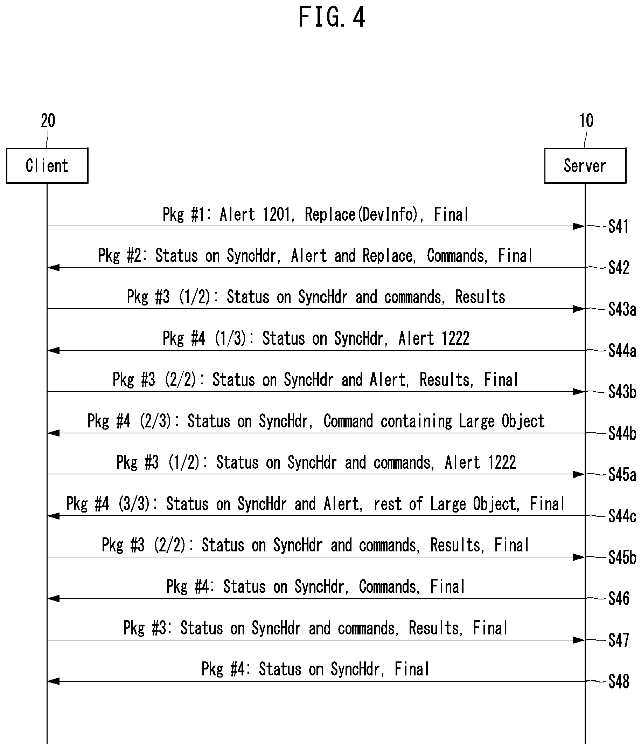

FIG. 4 is a sequence diagram illustrating a DM package flow of a large object addition for large object handling according to the OMA-DM protocol.

Referring to FIG. 4, the OMA-DM protocol provides a function of transmitting one SyncML package using several DM messages. This is necessary when one SyncMI, package has too large a size to be transmitted through one SyncML message. For example, such a limitation may be imposed by limitations on a transmission protocol or a small footprint device.

According to the OMA-DM protocol, the role of a package for logically grouping items is very limiting. Most limitations are placed by a message rather than a package. For example, a command is required to completely correspond to one message. Commands include a sequence command and an atomic command, and each command is required to completely correspond to one message.

To avoid overwhelming a DM client with limited resources, a DM server is not allowed to send a new command to a client that has not sent back a state for a previous command. In other words, most messages sent from a DM server to a DM client correspond to packages including at least one message. However, it is an exceptional case when a DM server sends a large object or requests more messages, that is, uses an alert 1222. A package including large object data includes as many messages as required for transmitting a large object.

ADM server always has one of the states of 1) to 3) given below in relation to a package boundary.
1) The DM server sends a complete package (S42, S44c, S46, and S48). In this state, the DM server waits for a state of a DM client with regard to a command transmitted as the package. Since a state and a result may be as large as a result of a Get-command, the DM client may send several messages back to the DM server before completing its response.
2) The DM server receives a complete package, that is, a package response, from the DM client (S41, S43b, S45b, and S47). In this state, the DM server may send a new command to the DM client.
3) The DM server sends at least one message which is a part of the same package and does not yet send a final message of a current package (S44a and S44b). This state is valid only when the DM server sends a large object, and the package is finished when the last chunk of the large object is sent.

Meanwhile, the DM server may receive an incomplete package response not including the final message from the DM client (S43a and S45a).

Since basic transmission of a DM message has request and response formats, the DM client or the DM server may send a message not including a new command or the final flag to maintain a request or response cycle. For example, when the DM server is in state 1, that is, the state of 1) above, the DM server may receive many messages including a state and a result from the DM client. The DM server responds to each message sent by the DM client but may not include a new command in the corresponding response. In this state, a message sent by the DM server may include a state with regard to SyncHdr sent by the DM client and a message for the alert 1222, that is, an additional message. A state is transmitted as a response to an alert, not as a response to a result. When the DM server tries to stop the session, the message for the alert 1222 may be replaced with an alert message 1223, that is, a session stop message.

As described above, FIG. 4 illustrates a method of using the foregoing several messages.

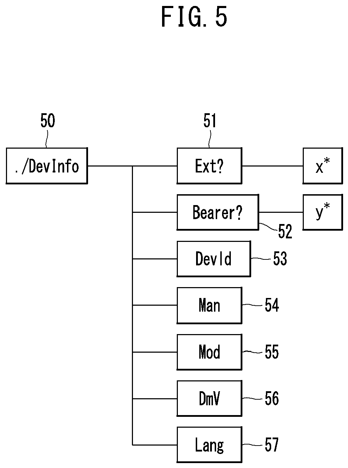

FIG. 5 is a diagram illustrating an addressing scheme for DevInfo items of a replace message which is an alert message 1201 of package #1.

Referring to FIG. 5, DevInfo 50 in an existing message includes an Ext field 51, a Bearer field 52, a DevID field 53, a Man field 54, a Mod field 55, a DmV field 56, and a Lang field 57.

Here, the Ext field 51 is an optional field in which an expandable subtree in a DevInfo format is defined. The Bearer field 52 is an optional field in which an item related to a network bearer is defined. In the DevID field 53, a device ID is defined. In the Man field 54, a device manufacturer is defined. In the Mod field 55, a device model ID is defined. In the DmV field 56, DM version information supported by a device is defined. In the Lang field 57, a user interface language shown in a device is defined.

The foregoing OMA-DM protocol may be configured so that a DM server or a DM client notifies a DM client or a DM server of a change in a DM tree through a DM tree change alert message.

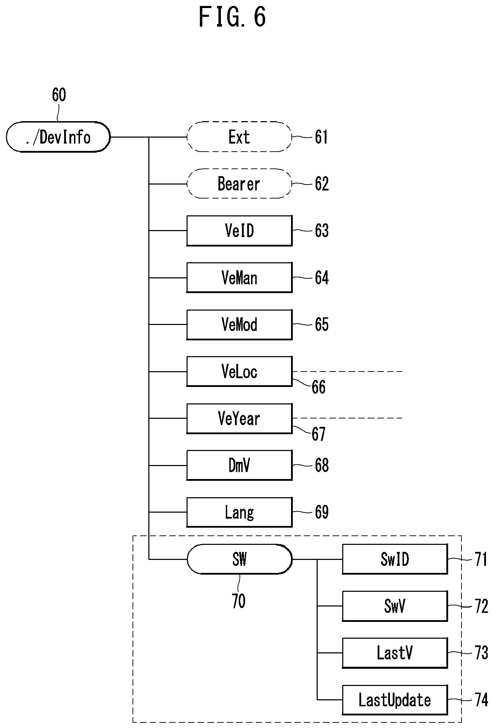

FIG. 6 is a diagram illustrating an expanded structure of DevInfo (simply, "expanded DevInfo") which may be employed in a method of extending message nodes of an OMA-DM protocol to improve efficiency of vehicle OTA updates (simply, "the message node extension method").

Referring to FIG. 6, the message node extension method may employ an expanded DevInfo format. The expanded DevInfo format may be used for a client to synchronize state information of a vehicle device with a server in the case of a vehicle OTA update.

The client may correspond to a DM client which supports DM and may be referred to as a client device or a vehicle device. Also, the server may correspond to a DM server which supports DM and may be referred to as a server device or the like.

Expanded DevInfo 60 may include an Ext field 61, a Bearer field 62, a VeID field 63, a VeMan field 64, a VeMod field 65, a VeLoc field 66, a VeYear field 67, a DmV field 68, a Lang field 69, an SW field 70, an SwID field 71, an SwV field 72, a LastV field 73, and a LastUpdate field 74.

Here, the Ext field 61 is an optional field in which an expandable subtree in a DevInfo format may be defined. The Bearer field 62 is an optional field in which an item related to a network bearer may be defined. In the VeID field 63, a vehicle ID may be defined. In the VeMan field 64, a vehicle manufacturer may be defined. In the VeMod field 65, a vehicle model ID may be defined. In the VeLoc field 66, a vehicle registration district may be defined. In the VeYear field 67, a production year of a vehicle may be defined. In the DmV field 68, DM version information supported by a DM client of a vehicle may be defined. In the Lang field 69, a user interface language shown in a DM client of a vehicle may be defined. In the SW field 70, software (SW) expansion may be defined. In the SwID field 71, a target SW ID may be defined. In the SwV field 72, a current version of target SW may be defined. In the LastV field 73, a last downloaded SW version may be defined. In the LastUpdate field 74, a last update date may be defined.

The foregoing expanded DevInfo format is shown in Table 1 below.

**[Table 1]**

| Field | Description |
|---|---|
| Ext (op) | expandable subtree |
| Bearer (op) | item related to network bearer |
| VeID | vehicle ID (vehicle number) |
| VeMan | vehicle manufacturer |
| VeMod | vehicle model ID |
| VeLoc | vehicle registration district |
| VeYear | production year of vehicle |
| DmV | DM version information supported by DM client of vehicle |
| Lang | user interface language shown in DM client of vehicle |
| SW | SW expansion |
| SwID | target SW ID |
| SwV | current version of target SW |
| LastV | last downloaded SW version |
| LastUpdate | last update date |

When the VeLoc field 66 defines "Seoul" as a vehicle registration district, this may be represented in a SyncML format as follows.

```
        <Item>
         <Source><LocURI> ./DevInfo/VeLoc </LocURI><Source>
         <Meta>
                  Format xmlns="syncml:metinf"> chr </Format>
                  <Type xmlns=ʺʺsyncml:metinf"> text/plain </Type>
         </Meta>
         <Data> Seoul </Data>
        </Item>
```

When the VeYear field 67 defines "December 12, 2020" as a production year of a vehicle, this may be represented in the SyncML format as follows.

```
        <Item>
         <Source><LocURI> ./DevInfo/VeYear </LocURI><Source>
         <Meta>
                  Format xmlns="syncml:metinf"> chr </Format>
                  <Type xmlns=ʺʺsyncml:metinf"> text/plain </Type>
         </Meta>
         <Data> 2020-12-12 </Data>
        </Item>
```

When the SwID field 71 of the SW field 70 defines "880f36570" as an ID of target SW, this may be represented in the SyncML format as follows.

```
        <Item>
         <Source><LocURI> ./DevInfo/SW/SwID </LocURI><Source>
         <Meta>
                  Format xmlns="syncml:metinf"> chr </Format>
                  <Type xmlns=ʺʺsyncml:metinf"> text/plain </Type>
         </Meta>
         <Data> 880f36570 </Data>
        </Item>
```

When the SwV field 72 of the SW field 70 defines "version 1(v1)" as a current version of target SW, this may be represented in the SyncML format as follows.

```
        <Item>
         <Source><LocURI> ./DevInfo/SW/SwV </LocURI><Source>
         <Meta>
                  Format xmlns="syncml:metinf"> chr </Format>
                  <Type xmlns=ʺʺsyncml:metinf"> text/plain </Type>
         </Meta>
         <Data> v1 </Data>
        </Item>
```

When the LastV field 73 of the SW field 70 defines "version 1(v1)" as an SW version last downloaded to a vehicle device, this may be represented in the SyncML format as follows.

```
        <Item>
         <Source><LocURI> ./DevInfo/SW/LastV </LocURI><Source>
         <Meta>
                  Format xmlns="syncml:metinf"> chr </Format>
                  <Type xmlns=ʺʺsyncml:metinf"> text/plain </Type>
         </Meta>
         <Data> v1 </Data>
        </Item>
```

When the LastUpdate field 74 of the SW field 70 defines "December 24, 2020" as a last update date, this may be represented in the SyncML format as follows.

```
        <Item>
         <Source><LocURI> ./DevInfo/SW/LastUpdate </LocURI><Source>
         <Meta>
                  Format xmlns="syncml:metinf"> chr </Format>
                  <Type xmlns=ʺʺsyncml:metinf"> text/plain </Type>
         </Meta>
         <Data> 2020-12-24 </Data>
        </Item>
```

According to this example embodiment, it is also possible to provide a DevInfo node with new items added for enough vehicle information synchronization in the case of an OTA update of an autonomous vehicle by extendig DevInfo items for synchronizing device state information of the autonomous vehicle in an OMA-DM standard.

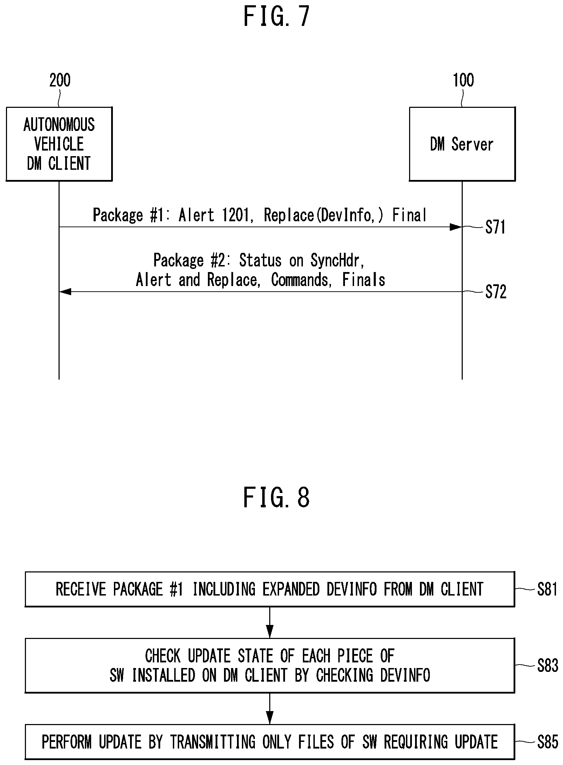

FIG. 7 is a sequence diagram illustrating a method of extending message nodes using the expanded DevInfo of FIG. 6.

Referring to FIG. 7, the method of extending message nodes may be implemented by package transmission and reception between a DM client 200 of an autonomous vehicle and a DM server 100 and operations of the DM server 100 and the DM client 200.

The method of extending message nodes will be described focusing on the DM client 200. The DM client 200 may first generate package #1 including vehicle device information DevInfo. Here, the vehicle device information DevInfo may be simply referred to as device information or DevInfo.

Subsequently, the DM client 200 may transmit package #1 including the vehicle device information DevInfo to the DM server 100 (S71). Package #1 may include an alert message 1201 and a Replace Final message.

In this example embodiment, the vehicle device information DevInfo may include information on a field in which information on a vehicle registration district is defined (VeLoc field), a field in which information on a production year of a vehicle is defined (VeYear field), and a field in which an SW expansion is defined (SW field). Also, the vehicle device information DevInfo may include fields listed in Table 1 and may be used for the DM server 100 to check an update state of SW installed on the DM client 200 or SW stored by the DM client 200 of a vehicle such as an autonomous vehicle.

Subsequently, the DM client 200 may receive package #2 from the DM server 100 (S72). Package #2 is a package for initialization which is basically transmitted from the DM server 100 to the DM client 200. Package #2 may include state information of a SyncHdr element, alert and replace elements, a commands element, and a finals element.

Here, the DM client 200 may only receive SW files requiring an update from the DM server 100 through package #2.

Subsequently, the DM client 200 may only update the SW files requiring an update using the received SW files.

FIG. 8 is a flowchart illustrating a method of extending message nodes according to another example embodiment of the present disclosure.

Referring to FIG. 8, according to the method of extending message nodes performed by a DM server, package #1 including vehicle device information may be received from a DM client of a vehicle (S81). The vehicle device information is device information DevInfo defined in the OMA-DM standard and may be expanded DevInfo newly proposed in this example embodiment. In this example embodiment, vehicle device information may be simply referred to as device information or DevInfo.

Subsequently, the DM server may check an update state of SW installed on the DM client or SW stored by the DM client by checking DevInfo (S83). DevInfo may include a field in which information on a vehicle registration district is defined (VeLoc field), a field in which information on a production year of a vehicle is defined (VeYear field), a field in which an SW expansion is defined (SW field), and the like. Also, the SW field may include a field in which an ID of target SW is defined (SwID field), a field in which a current version of target SW is defined (SwV field), a field in which a last downloaded SW version is defined (LastV field), and a field in which a last update date is defined (LastUpdate field).

Subsequently, the DM server may only extract SW files for updating SW which requires an additional update according to an update state of SW of the vehicle, for example, an autonomous vehicle, checked through DevInfo and transmit the extracted SW files to the DM client (S85).

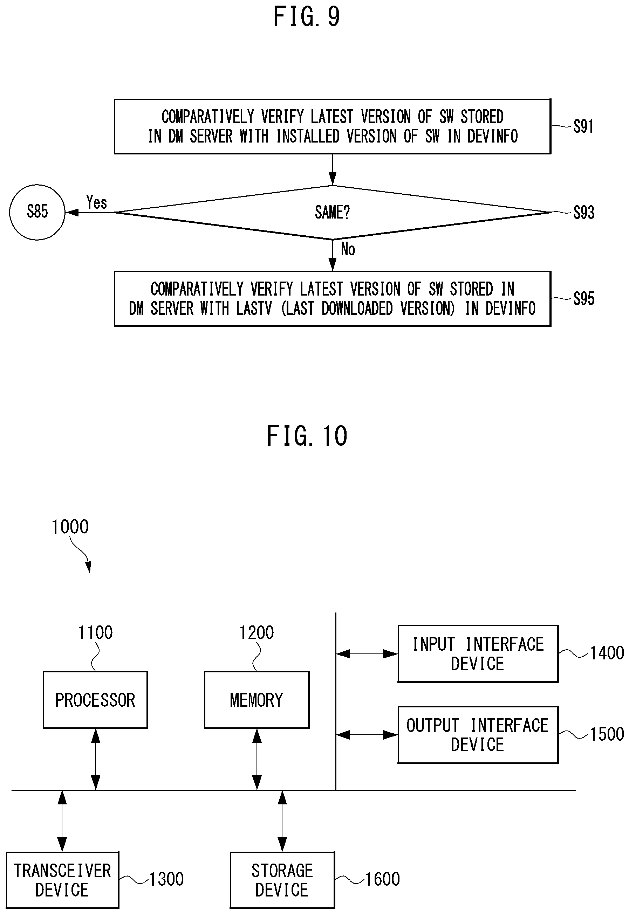

FIG. 9 is a flowchart illustrating a detailed process which may be employed in the checking process of FIG. 8.

Referring to FIG. 9, the DM server may check the update state of the SW installed on the DM client or SW possessed by the DM cliento on the basis of DevInfo and then compare a latest version of the SW stored in or held by the DM server with the current version of the target SW in the SwV field of DevInfo which is a version of the SW installed in the vehicle (S91).

Subsequently, when the latest version of the SW held by the DM server is found not to be the same as the current version of the target SW (No in S93) as a comparison result of the comparison operation S91, the DM server may comparatively verify the latest version of the SW held by the DM server with an SW version in the LastV field of DevInfo that was most recently downloaded (S95).

Meanwhile, when the latest version of the SW held by the DM server is found to be the same as the current version of the target SW (Yes in S93) as a comparison result of the comparison operation S91, the DM server may only extract SW files for updating the SW which requires an additional update according to an update state of the SW of the vehicle, for example, an autonomous vehicle, checked through DevInfo and transmit the extracted SW files to the DM client (see S85 of FIG. 8).

Subsequently, when the latest version of the SW held by the DM server is found to be different from the SW version in the LastV field of DevInfo that was most recently downloaded as a comparison result of the comparative verification operation S95, the DM server may extract the latest version of the target SW held by the DM server and transmit the latest version of version of the target SW to the DM client.

Meanwhile, when the latest version of the SW held by the DM server is found to be the same as the last downloaded SW version in the LastV field of DevInfo as a comparison result of the comparative verification operation S95, the DM server may determine that the target SW is normal or of the latest version, and finish the process.

An example of an application process of the method of extending message nodes according to this example embodiment is as follows. When a DM client of an autonomous vehicle has first SW, second SW, and third SW, a current version SwV of the first SW is v1, a last downloaded SW version LastV of the first SW is v1, a current version SwV of the second SW is v1, a last downloaded SW version of the second SW is v2, a current version SwV of the third SW is v2, a last downloaded SW version of the third SW is v3, and the DM client has a latest SW updater version of v2, the DM server may transmit an update file v2 for updating the first SW and transmit an update recommendation for the second SW.

FIG. 10 is a schematic block diagram which may be employed by an apparatus for extending message nodes of an OMA-DM protocol to improve efficiency of vehicle OTA updates (simply, "message node extension apparatus") according to another example embodiment of the present disclosure.

Referring to FIG. 10, a message node extension apparatus 1000 may include at least one processor 1100 for implementing a method of extending message nodes of an OMA-DM protocol to improve efficiency of vehicle OTA updates. The at least one processor 110 may be installed in a DM client or a DM server.

Also, the message node extension apparatus 1000 may further include a memory 1200, a transceiver device 1300, an input interface device 1400, an output interface device 1500, a storage device 1600, or a combination thereof. Components included in the message node extension apparatus 1000 may be connected through a bus 1700 to communicate with each other.

Also, the components included in the message node extension apparatus 1000 may not be connected through the common bus 1700 but may be connected to the processor 1100 through individual interfaces or individual buses. For example, the processor 1100 may be connected to at least one of the memory 1200, the transceiver device 1300, the input interface device 1400, the output interface device 1500, and the storage device 1600 through a dedicated interface.

The processor 1100 may be a central processing unit (CPU), a graphics processing unit (GPU), or a dedicated processor for performing methods according to example embodiments of the present disclosure. Each of the memory 1200 and the storage device 1600 may be configured as at least one of a volatile storage medium and a non-volatile storage medium. For example, the memory 1200 may be configured as at least one of a read-only memory (ROM) and a random-access memory (RAM).

The transceiver device 1300 may include a sub-communication system for supporting communication by exchanging signals and data with a DM server through a network or supporting communication by exchanging signals and data with a DM client through a network. The sub-communication system may be configured to support a wireless communication method or a hybrid communication method in which wireless and wired communication methods are mixed.

Here, the network may include a network supporting device to device (D2D) communication, sidelink communication, new radio (NR) vehicular to everything (V2X) communication, and the like. Also, the network may include any communication network which may be established between a DM server in a core network or an edge network or a specific service server including the DM server and a DM client connected through a mobile communication network, a wireless communication network, a satellite network, or a combination thereof or a vehicle equipped with the DM client.

The input interface device 1400 may include at least one input device selected from among a keyboard, a microphone, a touchpad, a touchscreen, a remote control, and the like, and an input signal processing part for processing a signal input through the at least one input device or mapping the signal to a prestored command.

The output interface device 1500 may include an output signal processing part for mapping a signal output under control of the processor 1100 to a prestored signal form or level or processing the signal, and at least one output device for outputting a signal or information in the form of vibrations, light, sound, heat, or the like according to the signal of the output signal processing part. The at least one output device may include at least one selected from among output devices of a speaker, a display device, a printer, an optical output device, a vibration output device, and the like.

The processor 1100 may execute program commands stored in at least one of the memory 1200 and the storage device 1600 or an SW module having program commands. In other words, when the processor 1100 operates, the processor 1100 may perform the message node extension method illustrated in any one of FIGS. 7 to 9 according to program commands.

According to this example embodiment, it is possible to check each SW update state of a DM client installed in a vehicle, such as an autonomous vehicle or the like, on the basis of the data format of DevInfo and selectively transmit SW files for only SW requiring an update to the DM client. Accordingly, it is possible to reduce the amount of data and communication costs. Compared to the case of updating the entire SW, it is also possible to significantly reduce latency required for an update and significantly improve efficiency of OTA updates.

Meanwhile, the above message node extension method may be referred to as an update information provision method. Similarly, the above message node extension apparatus may be referred to as an update information provision apparatus.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the scope as defined by the following claims.

## Claims

1. A method of extending message nodes of an Open Mobile Alliance (OMA)-Device Management (DM) protocol which is performed by a server to improve efficiency of a vehicle over-the air (OTA) update, the method comprising:
receiving a package including vehicle device information (DevInfo) from a client of a vehicle; and
checking an update state of software (SW) possessed by the client on the basis of information having a field for defining information on a vehicle registration district, a field for defining information on a production year of the vehicle, and an SW field for defining an SW expansion which are included in the DevInfo.

2. The method of claim 1, wherein the SW field includes a field for defining an identifier (ID) of target SW, a field for defining a current version of the target SW, a field for defining a last downloaded SW version, and a field for defining a last update date.

3. The method of claim 1, wherein the checking of the update state of the SW comprises comparing a latest version of the SW stored in the server with a current version of target SW in the DevInfo which is a version of the SW installed in the vehicle.

4. The method of claim 3, wherein the checking of the update state of the SW further comprises, when the latest version of the SW stored in the server is found not to be the same as the current version of the target SW as a result of comparing the latest version with the current version, comparatively verifying the latest version of the SW stored in the server with a last downloaded version of the SW in the DevInfo.

5. The method of claim 1, further comprising transmitting only a SW file requiring an update to the client,
wherein the client updates only SW requiring an update in the vehicle with the SW file.

6. A message node extension apparatus which is a server using a method of extending message nodes of an Open Mobile Alliance (OMA)-Device Management (DM) protocol to improve efficiency of a vehicle over-the air (OTA) update, the message node extension apparatus comprising:
a transceiver device installed in the server and connected to a client of a vehicle through a network; and
a processor connected to the transceiver device and configured to control operations of the transceiver device,
wherein the processor performs operations of:
receiving a package including vehicle device information (DevInfo) from the client; and
checking an update state of software (SW) possessed by the client on the basis of information having a field for defining information on a vehicle registration district, a field for defining information on a production year of the vehicle, and an SW field for defining an SW expansion which are included in the DevInfo.

7. The message node extension apparatus of claim 6, wherein the SW field includes a field for defining an identifier (ID) of target SW, a field for defining a current version of the target SW, a field for defining a last downloaded SW version, and a field for defining a last update date.

8. The message node extension apparatus of claim 6, wherein the processor compares a latest version of the SW stored in the server with a current version of target SW in the DevInfo which is a version of the SW installed in the vehicle.

9. The message node extension apparatus of claim 8, wherein, when the latest version of the SW stored in the server is found not to be the same as the current version of the target SW as a comparison result, the processor comparatively verifies the latest version of the SW stored in the server with a last downloaded version of the SW in the DevInfo.

10. The message node extension apparatus of claim 6, wherein the processor may further perform an operation of transmitting a SW file requiring an update to the client,
wherein the SW file is used for the client to update only SW requiring an update in the vehicle.
